# EUROPÄISCHE PATENTSCHRIFT

(11) **EP 4 706 383 B1**
(45) Veröffentlichungstag und Bekanntmachung des Hinweises auf die Patenterteilung: **04.11.2026**
(21) Anmeldenummer: 25192686.1
(22) Anmeldetag: 30.07.2025
(51) Int. Cl.: A01K 1/12

(54) **FLEXIBLE SEGMENTIERUNG EINES WARTEBEREICHS EINER ANORDNUNG ZUM MELKEN MILCHGEBENDER TIERE, INSBESONDERE VON KÜHEN**
FLEXIBLE SEGMENTATION OF A WAITING AREA OF AN ARRANGEMENT FOR MILKING DAIRY ANIMALS, IN PARTICULAR COWS
SEGMENTATION FLEXIBLE D'UNE ZONE D'ATTENTE D'UN AGENCEMENT DE TRAITE D'ANIMAUX LAITIERS, EN PARTICULIER DE VACHES

(30) Priorität: 06.09.2024 DE 202024105125 U
(43) Veröffentlichungstag der Anmeldung: 11.03.2026
(73) Patentinhaber: GEA Farm Technologies GmbH, 59199 Bönen (DE)
(72) Erfinder: Rüth, Tobias, 59063 Hamm (DE)
(74) Vertreter: Keenway Patentanwälte Neumann Heine Taruttis

(56) Entgegenhaltungen:
- WO-A1-2023/113688
- US-A1- 2006 249 083
- US-A1- 2008 282 985

## Beschreibung

Der Gegenstand der Erfindung bezieht sich auf eine Anordnung zum Melken milchgebender Tiere, insbesondere von Kühen.

Die Anordnung umfasst einen Melkbereich mit einer Mehrzahl von Melkplätzen. Jeder Melkplatz ist mit einer Melkeinrichtung ausgestattet, die ein Melkzeug mit mindestens einem Melkbecher aufweist. Der Melkbecher ist dazu bestimmt, an eine Zitze des milchgebenden Tiers angesetzt zu werden und ermolkene Milch abzuführen. Der Melkvorgang als solcher erfolgt in der bekannten Weise dadurch, dass wechselnde Beaufschlagung eines Zwischenraums zwischen der Melkbecherhülse und dem Zitzengummi mit Vakuum erfolgt.

Es ist bekannt, dass die zu melkenden Tiere über einen Zugang in einen Wartebereich überführt werden, von dem aus sie zu den einzelnen Melkplätzen gelangen können. Die Melkplätze können automatische oder halbautomatische Melksysteme aufweisen.

Es ist darüber hinaus bekannt, dass in Milchviehbetrieben eine Herde in mindestens zwei Gruppen unterteilt werden kann. Diese Tiergruppen werden zeitlich versetzt in den Wartebereich überführt, da hierdurch eine Vermischung der Tiere unterschiedlicher Gruppen vermieden werden soll, wie dies aus der DE 101 31 443 A1 bekannt ist. Um zu erreichen, dass die Tiere auch tatsächlich gemolken werden, werden die Tiere einer Gruppe in den Wartebereich getrieben, wie dies durch die WO 2023/113688 A1 offenbart ist. Durch diese Druckschrift ist bekannt, dass der Wartebereich in zwei Sektoren unterteilt ist. Mittels einer Treibehilfe werden die Tiere in den zweiten, dem Eingang zum Wartebereich entfernteren, Sektor getrieben. Durch Trennmittel wird der zweite Sektor gegenüber dem ersten Sektor abgesperrt, so dass eine zweite Gruppe von Tieren in den ersten Sektor gelangen kann.

Die Tiere der zweiten Gruppe können dann die Melkplätze des ersten Sektors aufsuchen. Bei dieser Verfahrensführung wird davon ausgegangen, dass die sich im zweiten Sektor befindenden Tiere freiwillig die Melkplätze aufsuchen, dort gemolken und danach die Melkplätze verlassen.

Es ist bekannt, dass in einem Milchviehbetrieb die Gruppen der Herde unterschiedliche Größen haben können. Unter einer Größe einer Gruppe wird die Anzahl der Tiere verstanden. So kann bspw. eine Gruppe aus Tieren bestehen, bei denen es sich um Tiere handelt, die krank sind. Diese Tiere werden dann an denselben Melkplätzen gemolken, wie gesunde Tiere.

Eine solche Verfahrensführung hat den Nachteil, dass bei einem Melkbereich mit einer Vielzahl von Plätzen eine Überwachung der Melkplätze stattfinden muss, um Gewissheit zu erlangen, an welchem Melkplatz eine kranke Kuh gemolken wurde. Ein solcher Melkplatz unterliegt dann einer besonderen und intensiven Reinigung, um eine Querkontamination mit weiteren Tiere, die diesen Melkplatz betreten, zu vermeiden. Das bedeutet auch, dass ein erhöhter apparativer Aufwand an jedem Melkplatz vorhanden sein muss.

Die Effizienz einer Anordnung zum Melken von Milch gebenden Tieren zu erhöhen und insbesondere den apparativen Aufwand einer solchen Anordnung zu verringern, ist die Zielsetzung der vorliegenden Erfindung,

Diese Zielsetzung wird durch eine Anordnung mit den Merkmalen des unabhängigen Anspruchs gelöst. Vorteilhafte Weiterbildungen und Ausgestaltungen der erfindungsgemäßen Anordnung sind Gegenstand der abhängigen Ansprüche.

Die erfindungsgemäße Anordnung zum Melken von Tieren, insbesondere von Kühen, umfasst einen Melkbereich mit einer Mehrzahl von Melkplätzen. Bei den Melkplätzen kann es sich um automatisch oder halbautomatisch arbeitende Melkplätze handeln, die entsprechende Melkvorrichtungen aufweisen. Die Melkplätze können robotergestützte Melkplätze sein.

Die Anordnung weist einen Wartebereich mit einem Zugang auf. Durch den Zugang kann eine Mehrzahl von Tieren, insbesondere Kühen, in den Wartebereich gelangen. Der Wartebereich ist so angeordnet, dass Tiere die Melkplätze aus dem Wartebereich heraus betreten können. Die zu melkenden Tiere können aus dem Wartebereich freiwillig zu den Melkplätzen gelangen. Die Ausgänge der Melkplätze sind dabei so angeordnet, dass die Tiere nach dem Melkvorgang nicht oder nicht unmittelbar in den Wartebereich zurückkehren können. Die Anordnung weist ein ortsfest angeordnetes, bewegliches Trennmittel auf, durch welches der Wartebereich in zwei Sektoren unterteilbar ist. Die Unterteilung des Wartebereichs in zwei Sektoren durch das ortsfeste bewegliche Trennmittel geht damit einher, dass dem einen Sektor eine bestimmte Anzahl von Melkplätzen zugeordnet ist. Dem anderen Sektor sind die weiteren Melkplätze zugeordnet. Die Melkplätze können identisch ausgebildet sein. Dies ist nicht zwingend notwendig. In vorteilhafter Weise sind die Melkplätze des einen Sektors anders ausgestaltet als die Melkplätze des anderen Sektors. So können z. B. kranke Tiere in dem einen Sektor gemolken werden, da die Melkplätze dieses Sektors an die Bedürfnisse eines kranken Tiers angepasst sind. So können bspw. die Melkplätze dieses Sektors zusätzliche Reinigungseinheiten und Steuerungen aufweisen, um eine erhöhte Hygienemaßnahme durchzuführen. Es besteht auch die Möglichkeit, dass diese Melkplätze so ausgebildet sind, dass die Milch eines kranken Tiers nicht zu verwertbarer Milch gelangen kann. Das Trennmittel ist so ausgebildet, dass es in einer ersten Position den gesamten Wartebereich freigibt. In dieser Position des Trennmittels stehen sämtliche Melkplätze zum Melken einer Gruppe oder der gesamten Herde zur Verfügung, so dass eine hohe Effizienz erreicht wird.

In einer zweiten Position gibt das Trennmittel nur den dem Zugang benachbarten Sektor frei. In dieser zweiten Position wird die Anzahl der zum Melken bereitgestellten Anzahl der Melkplätze reduziert. Dies hat den Vorteil, dass auch bei kleinen Tiergruppen eine erhöhte Effizienz der Melkanordnung als solcher erreicht wird. Insbesondere wird die Überwachung der Tiere, die sich in dem Sektor befinden, vereinfacht. Sollte ein manueller Eingriff notwendig sein, z. B. in der Form, dass das Tier an den Melkplatz getrieben werden soll, so ist es für einen Operator einfacher, einen kleineren Bereich zu durchschreiten als den gesamten Wartebereich der Anordnung.

Erfindungsgemäß ist ein stationäres Absperrmittel vorgesehen. Das stationäre Absperrmittel und das Trennmittel trennen zwei benachbarte Sektoren voneinander. Dies hat den Vorteil, dass der apparative Aufwand hinsichtlich des beweglichen Trennmittels verringert werden kann. Die Absperrmittel sind stationär, das heißt ortsfest und unbeweglich innerhalb des Wartebereichs angeordnet. Es bedarf bspw. keiner Trennmittel, die sich über die gesamte Breite und/oder Länge des Wartebereichs erstrecken, insbesondere wenn ein Trennmittel und ein Absperrmittel eine Barriere über die Gesamte Breite oder gesamte Länge des Wartebereichs bilden.

Der Wartebereich ist in mehrere nebeneinander und hintereinander angeordnete Sektoren unterteilt. Die Unterteilung des Wartebereichs kann an die Anzahl der Tiergruppen eines Milchviehbetriebs angepasst werden. Die erfindungsgemäße Anordnung ermöglicht eine hohe Flexibilität bei der Gestaltung des Wartebereichs, dies sowohl bei der Vorplanung als auch bei einer nachträglichen Änderung oder Erweiterung bestehender Anordnungen.

Das Absperrmittel erstreckt sich über einen Teil einer Längserstreckung des Wartebereichs. Insbesondere wird vorgeschlagen, dass das Absperrmittel entlang der Längsachse des Wartebereichs angeordnet ist. Alternativ oder zusätzlich erstreckt sich das Absperrmittel vorzugsweise über einen Teil der Quererstreckung des Wartebereichs.

Das Absperrmittel weist vorzugsweise mehrere Abschnitte auf, wobei zwischen zwei Abschnitten ein Trennmittel vorgesehen ist.

Ein Trennmittel ist vorzugsweise in einer vertikalen Ebene bewegbar, insbesondere verschwenkbar. Hierbei kann es sich bspw. um eine Biegesperre oder eine Schranke handeln.

Es besteht auch die Möglichkeit, dass das Trennmittel vorzugsweise in einer horizontalen Ebene bewegbar ist, insbesondere verschwenkbar.

Es besteht auch die Möglichkeit, dass ein Trennmittel sowohl in einer vertikalen als auch in einer horizontalen Ebene bewegbar ist. Dies kann vorzugsweise dadurch erreicht werden, dass eine auf und ab bewegbare Schranke um eine vertikale Achse verdrehbar ist.

Die Bewegung des Trennmittels kann manuell oder automatisiert durchgeführt werden. Vorzugsweise ist eine Steuerung zur automatischen auslesen eine Bewegung wenigstens eines Trennmittels vorgesehen, die mit einem Herdenmanagementsystem signaltechnisch verbunden ist. Das Herdenmanagementsystem stellt Informationen zur Verfügung welche Gruppe von Tieren einem Melkvorgang zugeführt werden sollen. In Abhängigkeit von der Gruppe werden dann die Trennmittel aktiviert, so dass der Wartebereich so unterteilt wird, dass entsprechend den Vorgaben für diese Tiergruppe der Sektor oder die Sektoren mit den zugehörigen Melkplätzen für diese Tiergruppe verfügbar sein werden.

Weitere Vorteile und Einzelheiten der erfindungsgemäßen Anordnung werden anhand der in den Figuren dargestellten Ausführungsbeispiele erläutert, ohne dass der Gegenstand der Erfindung auf diese Ausführungsbeispiele beschränkt ist.

Es zeigen:
- Fig. 1:: schematisch ein erstes Ausführungsbeispiel einer Anordnung,
- Fig. 2:: schematisch ein zweites Ausführungsbeispiel einer erfindungsgemäßen Anordnung,
- Fig. 3:: schematisch und perspektivisch ein drittes Ausführungsbeispiel einer Anordnung und
- Fig. 4:: schematisch ein Absperrmittel mit einem Trennmittel.

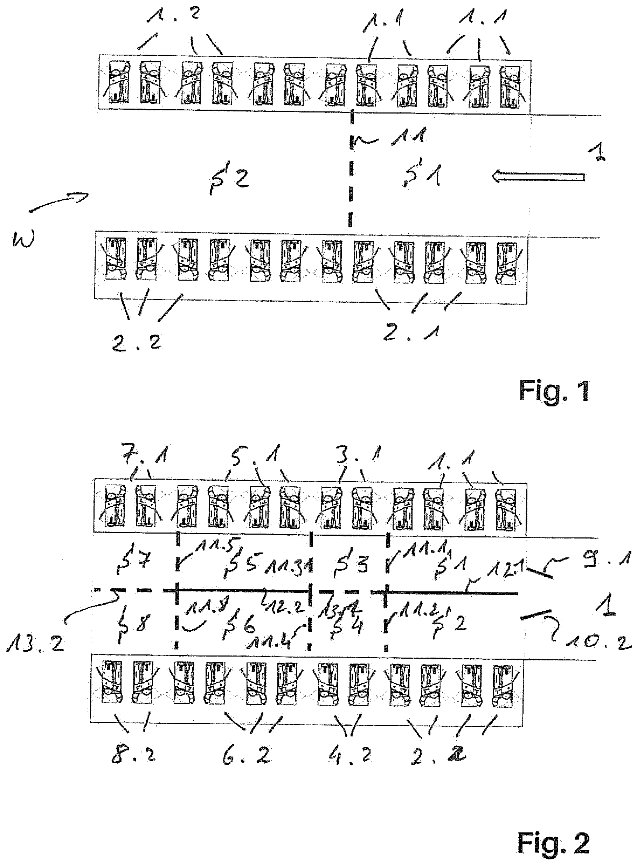

In der Fig. 1 ist schematisch eine Anordnung zum Melken von Tieren, insbesondere von Kühen, dargestellt. Die Anordnung umfasst eine erste Reihe von Melkplätzen 1.1 und 1.2. Gegenüber der Reihe der Melkplätze 1.1, 1.2 ist eine zweite Reihe von Melkplätzen 2.1 und 2.2 dargestellt. Zwischen den beiden Reihen von Melkplätzen 1.1 bis 2.2 ist ein Wartebereich W vorgesehen. Schematisch durch die gestrichelte Linie ist ein Trennmittel 11 gekennzeichnet, welches ortsfest und beweglich im Wartebereich W angeordnet ist. In einer zweiten Position des Trennmittels 11 unterteilt das Trennmittel 11 den Wartbereich W in zwei Sektoren S1 und S2. Dem Sektor S1 sind die Melkplätze 1.1 und 2.1 zugeordnet. Dem Sektor S2 sind die Melkplätze 1.2 und 2.2 zugeordnet. Mit dem Bezugszeichen 1 ist ein Zugang zum Wartebereich W gekennzeichnet. Befindet sich das Trennmittel 11 in seiner ersten Position, so sind die Sektoren S1 und S2 für Tiere, die über den Zugang 1 in die Anordnung gelangen verfügbar. Der gesamte Wartebereich W, der durch die Sektoren S1 und S2 gebildet ist, steht zur Verfügung. Die Tiere, die den Wartebereich und somit die Sektoren S1 und S2 betreten, können aus dem Wartebereich heraus zu den Melkplätze 1.1 bis 2.2 gelangen.

Bei den Melkplätzen 1.1 bis 2.2 handelt es sich vorzugsweise um vollautomatische robotergestützte Melkplätze. Nach einem erfolgten Melkvorgang verlassen die Tiere die Melkplätze derart, dass sie nicht in den Wartebereich W zurückkehren können.

Befindet sich das Trennmittel 11 in einer zweiten Position, so wird der Wartebereich W, wie bereits vorstehend genannt, in die Sektoren S1 und S2 unterteilt. In dieser Stellung des Trennmittels 11 können die Tiere nur den Sektor S1 betreten. Der Sektor S2 ist für die Tiere nicht zugänglich. Dem Sektor S1 sind die Melkplätze 1.1 und 2.1 zugeordnet. Dem Sektor S2 sind die Melkplätze 1.2 und 2.2 zugeordnet. Die Melkplätze 1.1 und 2.1 des Sektor S1 können verschieden von den Melkplätze 1.2 und 2.2 des Sektors S2 ausgestaltet sein.

Soll eine Herde, das heißt die Gesamtmenge der Tiere, gemolken werden, so befindet sich das Trennmittel 11 in seiner ersten Position, so dass die Gesamtheit der Tiere den Wartebereich über den Zugang 1 betreten kann.

Soll eine Gruppe von Tieren, das heißt eine Teilmenge der Herde, gemolken werden, so befindet sich das Trennmittel 11 in seiner zweiten Position, so dass nur der dem Zugang benachbarte Sektor S1 freigegeben wird. Den Tieren stehen dann die Melkplätze 1.1 und 2.2 zur Verfügung.

Fig. 2 zeigt schematisch ein zweites Ausführungsbeispiel einer Anordnung zum Melken von Tieren. Der Wartebereich W ist bei dem erfindungsgemäßen zweiten Ausführungsbeispiel in acht Sektoren S1 bis S8 unterteilt. Der Wartebereich W liegt zwischen zwei Reihen von Melkplätzen 1.1 bis 8.2. Dem Sektor S1 sind die Melkplätze 1.1, dem Sektor S3 sind die Melkplätze 3.1, dem Sektor S5 die Melkplätze 5.1 und dem Sektor S7 die Melkplätze 7.1 zugeordnet. Dem Sektor S2 sind die Melkplätze 2.2, dem Sektor S4 die Melkplätze 4.2, dem Sektor S6 die Melkplätze 6.2 und dem Sektor S8 die Melkplätze 8.2 zugeordnet. Im Zugang zu dem Sektor S1 ist ein verschwenkbares Tor 9.1 vorgesehen. Durch Öffnen des Tors 9.1 können Tiere aus dem Zugang 1 in den Sektor S1 gelangen. Dem Sektor S2 ist ein Tor 10.2 zugeordnet. Ist das Tor 10.2 geöffnet, so können Tiere in den Sektor S2 gelangen.

Aus der Darstellung nach Fig. 2 ist ersichtlich, dass quer zur Längsrichtung des Wartebereichs W Trennmittel 11.1, 11.3 und 11.5 vorgesehen sind. Das Trennmittel 11.1 ist zwischen dem Sektor S1 und dem Sektor S3 vorgesehen. Das Trennmittel 11.3 ist zwischen dem Sektor S3 und S5 vorgesehen. Das Trennmittel 11.5 ist zwischen dem Sektor S5 und S7 vorgesehen.

Die Sektoren S2 und S4 sind durch ein Trennmittel 11.2 voneinander getrennt. Die Sektoren S4 und S6 sind durch ein Trennmittel 11.4 voneinander getrennt. Die Sektoren S6 und S8 sind durch ein Trennmittel 11.8 voneinander getrennt.

Aus der Darstellung nach Fig. 2 ist des Weiteren ersichtlich, dass in Längsrichtung des Wartebereichs W ein stationäres Absperrmittel gebildet durch die Abschnitte 12.1 und 12.2 vorgesehen ist. Zwischen den Abschnitten 12.1 und 12.2 ist ein Trennmittel 13.1 vorgesehen. Zwischen dem stationären Absperrmittel 12.2 und einer stirnseitigen Begrenzung des Wartebereichs W ist ein Trennmittel 13.2 vorgesehen.

Beispielhaft bezugnehmend auf den Sektor S5 wird dieser durch das Absperrmittel 12.2 und die Trennmittel 11.3 und 11.5 begrenzt.

Befinden sich sämtliche Trennmittel 11.1 bis 11.8 und 13.1 und 13.2 in ihrer ersten Position, so steht der gesamte Wartebereich W den Tieren zur Verfügung. Sie können sich in diesem Wartebereich W frei bewegen.

In Abhängigkeit davon, welche Gruppe von Tieren gemolken werden soll, kann die Position der Trennmittel 11.1 bis 11.8 und 13.1 und 13.2 so verändert werden, dass bestimmte Sektoren voneinander getrennt oder miteinander verbunden sind.

Sind bspw. die Melkplätze 1.1 für eine bestimmte Gruppe von Tieren vorgesehen, so wird das Tor 10.2 geschlossen und das Trennmittel 11.1 in seine zweite Position verfahren, so dass die Tiere lediglich in den Sektor S1 eintreten können. Diese Tiere werden dann in den Melkplätzen 1.1 gemolken.

Bei einer anders gearteten Gruppe von Tieren werden bspw. die Trennmittel 11.1, 11.2 und 13.1 in eine Offenstellung (erste Position) gebracht, während die Trennmittel 11.3 und 11.4 in eine geschlossene Stellung ( zweite Position) gebracht werden, so dass für diese Gruppe die Sektoren S1, S2, S3 und S4 zur Verfügung stehen, so dass die Tiere die Melkplätze 1.1, 3.1, 4.2 und 2.2 betreten können.

Durch die Anordnung, wie sie bspw. in der Fig. 2 dargestellt ist, besteht auch die Möglichkeit, z. B. durch Öffnen des Tors 9.1 und bei entsprechender Stellung der Trennmittel 11.1, 11.3, 11.5 sowie 13.2 und 13.1 sicherzustellen, dass lediglich die Melkplätze 1.1, 3.1, 5.1 und 7.1 von den Tieren betretbar sind.

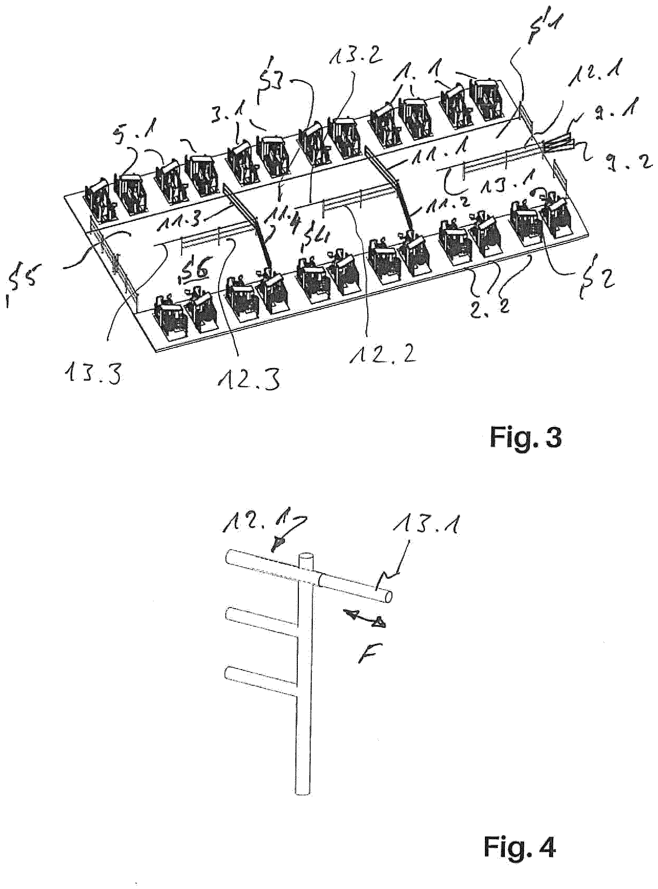

Die Trennmittel können so ausgebildet sein, dass diese in einer vertikalen und/oder horizontalen Ebene bewegbar sind. Dies ist schematisch in den Fig. 3 und 4 dargestellt.

In der Fig. 3 ist ein weiteres Ausführungsbeispiel einer erfindungsgemäßen Anordnung dargestellt. In diesem Ausführungsbeispiel sind die Trennmittel 11.1, 11.2, 11.3 und 11.4 um eine vertikale Achse verschwenkbar, die an den Absperrmitteln 12.1 bzw. 12.3 ausgebildet sind.

Das Trennmittel 13.1, 13.2, 13.3 ist durch ein teleskopartig angeordnetes Tor, welches in das stationäre Absperrmittel 12.1 hineinragt, wie aus der Fig. 4 ersichtlich ist, ausziehbar oder hineinschiebbar, so dass bspw. die Sektoren S1 und S2 voneinander getrennt oder verbunden werden können. Die Verschiebbarkeit ist durch den Pfeil F in der Fig. 4 angedeutet.

## Patentansprüche

1. Anordnung zum Melken von Tieren, insbesondere von Kühen, umfassend einen Melkbereich mit einer Mehrzahl von Melkplätzen (1.1, 2.2, 3.1, 4.2, 5.1, 6.2, 7.1, 8.2),
einen Wartebereich (W) mit einem Zugang (1), wobei der Wartebereich (W) so angeordnet ist, dass Tiere die Melkplätze (1.1, 2.2, 3.1, 4.2, 5.1, 6.2, 7.1, 8.2) aus dem Wartebereich (W) heraus betreten können,
wobei ein ortsfest angeordnetes bewegliches Trennmittel (11.1, 11.2, 11.3, 11.4, 11.5, 11.8) vorgesehen ist, durch welches der Wartebereich (W) in zwei Sektoren derart unterteilbar ist, dass das Trennmittel (11.1, 11.2, 11.3, 11.4, 11.5, 11.8) in einer ersten Position den gesamten Wartebereich (W) und in einer zweiten Position nur den dem Zugang benachbarten Sektor freigibt,
**dadurch gekennzeichnet, dass** ein stationäres Absperrmittel (12.1, 12.2, 12.3) sich über einen Teil einer Längsrichtung des Wartebereichs (W) erstreckt, und das Trennmittel (11.1, 11.2, 11.3, 11.4, 11.5, 11.8) quer zur Längsrichtung des Wartebereichs (W) vorgesehen ist, sodass der Wartebereich (W) in mehrere nebeneinander und hintereinander angeordnete Sektoren (S1, S2, S3, S4, S5, S6, S7, S8) unterteilbar ist.

2. Anordnung nach Anspruch 1, wobei sich das Absperrmittel (12.1, 12.2, 12.3) einen Teil einer Quererstreckung des Wartebereichs (W) erstreckt.

3. Anordnung nach wenigstens einem der vorhergehenden Ansprüche, wobei das Absperrmittel (12.1, 12.2, 12.3) mehrere Abschnitte aufweist, wobei zwischen zwei Abschnitten ein Trennmittel (13.1, 13.2, 13.3) vorgesehen ist.

4. Anordnung nach wenigstens einem der vorhergehenden Ansprüche, wobei das Trennmittel (11.1, 11.2, 11.3, 11.4, 11.5, 11.8) in einer vertikalen Ebene bewegbar, insbesondere verschwenkbar ist.

5. Anordnung nach wenigstens einem der Ansprüche 1 bis 3, wobei das Trennmittel (11.1, 11.2, 11.3, 11.4, 11.5, 11.8) in einer horizontalen Ebene bewegbar, insbesondere verschwenkbar ist.

6. Anordnung nach wenigstens einem der vorhergehenden Ansprüche, wobei zwei Reihen von Melkplätzen (1.1, 2.2, 3.1, 4.2, 5.1, 6.2, 7.1, 8.2) vorgesehen sind, zwischen denen sich der Wartebereich (W) befindet.

7. Anordnung nach wenigstens einem der vorhergehenden Ansprüche, wobei die Melkplätze (1.1, 2.2, 3.1, 4.2, 5.1, 6.2, 7.1, 8.2) automatische und /oder robotergestützte Melkplätze sind.

## Claims

1. Arrangement for milking animals, in particular cows, comprising a milking area with a plurality of milking stations (1.1, 2.2, 3.1, 4.2, 5.1, 6.2, 7.1, 8.2),
a waiting area (W) with an entrance (1), wherein the waiting area (W) is arranged such that animals can enter the milking stations (1.1, 2.2, 3.1, 4.2, 5.1, 6.2, 7.1, 8.2) from the waiting area (W),
wherein a stationary, movable partitioning means (11.1, 11.2, 11.3, 11.4, 11.5, 11.8) is provided, by means of which the waiting area (W) can be divided into two sectors such that the partitioning means (11.1, 11.2, 11.3, 11.4, 11.5, 11.8) opens up the entire waiting area (W) in a first position and, in a second position, opens up only the sector adjacent to the entrance,
**characterized in that** a stationary barrier means (12.1, 12.2, 12.3) extends along a portion of the longitudinal direction of the waiting area (W), and the partitioning means (11.1, 11.2, 11.3, 11.4, 11.5, 11.8) is provided transversely to the longitudinal direction of the waiting area (W), so that the waiting area (W) can be subdivided into several sectors (S1, S2, S3, S4, S5, S6, S7, S8) arranged side by side and one behind the other.

2. Arrangement according to claim 1, wherein the barrier means (12.1, 12.2, 12.3) extends over a portion of the transverse extent of the waiting area (W).

3. Arrangement according to at least one of the preceding claims, wherein the barrier means (12.1, 12.2, 12.3) comprises multiple sections, with a partitioning means (13.1, 13.2, 13.3) provided between two sections.

4. Arrangement according to at least one of the preceding claims, wherein the partitioning means (11.1, 11.2, 11.3, 11.4, 11.5, 11.8) is movable, in particular pivotable, in a vertical plane.

5. Arrangement according to at least one of claims 1 through 3, wherein the partitioning means (11.1, 11.2, 11.3, 11.4, 11.5, 11.8) is movable, in particular pivotable, in a horizontal plane.

6. Arrangement according to at least one of the preceding claims, wherein two rows of milking stations (1.1, 2.2, 3.1, 4.2, 5.1, 6.2, 7.1, 8.2) are provided, between which the waiting area (W) is located.

7. Arrangement according to at least one of the preceding claims, wherein the milking stations (1.1, 2.2, 3.1, 4.2, 5.1, 6.2, 7.1, 8.2) are automatic and/or robot-assisted milking stations.

## Revendications

1. Ensemble de traite d'animaux, en particulier de vaches, comprenant une zone de traite avec une multitude de postes de traite (1.1, 2.2, 3.1, 4.2, 5.1, 6.2, 7.1, 8.2),
une zone d'attente (W) avec un accès (1), la zone d'attente (W) étant disposée de telle sorte que les animaux peuvent entrer dans les postes de traite (1.1, 2.2, 3.1, 4.2, 5.1, 6.2, 7.1, 8.2) depuis la zone d'attente (W),
un moyen de séparation (11.1, 11.2, 11.3, 11.4, 11.5, 11.8) mobile disposé de manière stationnaire étant prévu, lequel permet de diviser la zone d'attente (W) en deux secteurs de telle manière que le moyen de séparation (11.1, 11.2, 11.3, 11.4, 11.5, 11.8) libère dans une première position toute la zone d'attente (W) et ne libère dans une deuxième position que le secteur adjacent à l'accès,
**caractérisé en ce qu'**un moyen d'arrêt (12.1, 12.2, 12.3) fixe s'étend sur une partie de la direction longitudinale de la zone d'attente (W) et le moyen de séparation (11.1, 11.2, 11.3, 11.4, 11.5, 11.8) est prévu transversalement à la direction longitudinale de la zone d'attente (W), si bien que la zone d'attente (W) peut être divisée en plusieurs secteurs (S1, S2, S3, S4, S5, S6, S7, S8) disposés côte à côte et les uns derrière les autres.

2. Ensemble selon la revendication 1, le moyen d'arrêt (12.1, 12.2, 12.3) s'étendant sur une partie de l'extension transversale de la zone d'attente (W).

3. Ensemble selon au moins l'une des revendications précédentes, le moyen d'arrêt (12.1, 12.2, 12.3) comportant plusieurs sections, un moyen de séparation (13.1, 13.2, 13.3) étant prévu entre deux sections.

4. Ensemble selon au moins l'une des revendications précédentes, le moyen de séparation (11.1, 11.2, 11.3, 11.4, 11.5, 11.8) pouvant être déplacé, en particulier pivoté, dans un plan vertical.

5. Ensemble selon au moins l'une des revendications 1 à 3, le moyen de séparation (11.1, 11.2, 11.3, 11.4, 11.5, 11.8) pouvant être déplacé, en particulier pivoté, dans un plan horizontal.

6. Ensemble selon au moins l'une des revendications précédentes, deux rangées de postes de traite (1.1, 2.2, 3.1, 4.2, 5.1, 6.2, 7.1, 8.2), entre lesquelles se trouve la zone d'attente (W), étant prévues.

7. Ensemble selon au moins l'une des revendications précédentes, les postes de traite (1.1, 2.2, 3.1, 4.2, 5.1, 6.2, 7.1, 8.2) étant des postes de traite automatiques et/ou à assistance robotisée.
